# EUROPEAN PATENT SPECIFICATION

(11) **EP 0 775 565 B1**
(45) Date of publication and mention of the grant of the patent: **08.03.2000**
(21) Application number: 96118395.1
(22) Date of filing: 15.11.1996
(51) Int. Cl.: B29C 45/17, B29C 45/37, B29C 33/32, B23H 9/12

(54) **Method of making a mould for injection moulding of optical parts of illumination devices for automobiles using curved elements**
Verfahren zur Herstellung einer Form zum Spritzgiessen von optischen Teilen von Beleuchtungsvorrichtungen für Kraftfahrzeuge wobei gekrümmte Elemente angewendet werden
Procédé de fabrication d' un moule pour mouler par injection des pièces optiques de dispositifs d'éclairage pour véhicules automobiles utilisant des éléments cintrés

(30) Priority: 21.11.1995 IT TO950934
(43) Date of publication of application: 28.05.1997
(73) Proprietor: MAGNETI MARELLI S.p.A., 20145 Milano (IT)
(72) Inventor: Todesco, Floriano, 10093 Collegno (IT); Masuelli, Stefania, 10043 Orbassano (IT)
(74) Representative: Cerbaro, Elena, Dr.

(56) References cited:
- EP-A- 0 047 645
- EP-A- 0 177 991
- EP-A- 0 537 953
- WO-A-94/20288
- CH-A- 357 488
- US-A- 2 899 535
- PATENT ABSTRACTS OF JAPAN vol. 11, no. 218 (M-607) [2665] , 15 July 1987 & JP 62 035820 A (MEIKI CO LTD), 16 February 1987,
- PATENT ABSTRACTS OF JAPAN vol. 10, no. 51 (M-457) [2108] , 28 February 1986 & JP 60 201919 A (MEIKI SEISAKUSHO K. K.), 12 October 1985,

## Description

The present invention relates to a method of making a mould for injection moulding of optical parts of illumination devices for automobiles using curved elements, according to the preamble of claim 1.

As is known, moulds for injection moulding comprise a stationary half-mould defining a dye into which the material for working is inserted, and a movable half-mould defining the shape of the piece to be produced and able to co-act with the abovementioned dye during the moulding phase.

In the production of optical parts for automobile illumination devices, the movable half-mould comprises a support wall to which is fixed a punch exhibiting the form of the piece to be produced. Furthermore, the punch bears the reliefs in negative of the particular lens which is to be produced.

Currently, developments in the art in the field of optics applied to automobiles have led to a requirement for optical parts that work by diffraction rather than by refraction and reflection, with surfaces which are curved in two dimensions. As a consequence of this requirement, technological arrangements need to be devised which make it possible to construct moulds which are able to reproduce diffractive optics in negative. On account of their dimensions such diffractive optics cannot be constructed with the conventional technology of machine tools, but rather by generating a lamina which bears the required optics etched in negative.

The lamina is generally obtained via electrodeposition processes, for example, nickel electrodeposition, or processes for the laser etching of ceramic blocks, which make it possible to obtain laminae having very accurate relief profiles. The thickness of the lamina is proportional to the dimensions of the reliefs and for reliefs with a height of between 0.4 and 200 µm the lamina takes thicknesses of between 0.05 and 3 mm respectively.

The laminae used for optical parts which are curved in two dimensions can be produced either in plane form, and subsequently matched to the punch, or in curved form. The choice between these two solutions depends substantially on the total thickness of the lamina and consequently on the height of the reliefs present on it.

When the reliefs take modest dimensions, the corresponding thickness of the lamina is such as to permit its manufacture in plane form. In this case it is simple to carry out finishing operations on the surface of the lamina in order to obtain levels of roughness which guarantee the desired adherence to the punch. When the surface of the lamina has reached the desired roughness, it is bent and fixed to the punch.

When, on the other hand, the reliefs take greater heights, the lamina is manufactured directly in the curved form. However, current manufacturing procedures (for example using electrodeposition) give rise to overly high surface roughnesses which are difficult to reduce to acceptable levels on account of the difficulties and excessive costs encountered in finishing operations on surfaces curved in two dimensions.

In the record sector, moulds are known for producing optical discs which effect contact between circular support of the disc and punch using either mechanical restraints or else magnetic or electromagnetic restraints.

However, these moulds cannot be used with curved laminar elements, but only with flat laminae exhibiting roughnesses typical of optical discs, i.e. roughnesses considerably lower than those used for manufacturing lenses of optical devices for automobiles.

EP-A-0 537 953 discloses a mould wherein a stamper is held in place on either the half-moulds by mechanical means comprising magnets or electromagnets embedded in the portion of the mould facing the stamper.

US-A-2 899 535 discloses a process of matching by electro-erosion or electrical discharge machining the surfaces of two cooperating flanges, which, when assembled, display sufficient conformity to ensure a tight seal against high vacuum.

The purpose of the present invention is thus to provide a method of making a mould for injection moulding of optical parts which overcomes the limitations of the known moulds.

According to the present invention there is provided a method of making a mould for injection moulding of optical parts of illumination devices for automobiles using curved elements, as defined in Claim 1.

For better understanding of the present invention a few preferred embodiments will now be described purely by way of non-limiting example and with reference to the appended drawings in which:
- Figure 1 illustrates a partially sectioned perspective view of a press carrying the mould made according to the present invention;
- Figure 2 illustrates in section a punch of the mould mounted on the press of Fig. 1; and
- Figure 3 illustrates in section a punch used in the method according to the present invention.

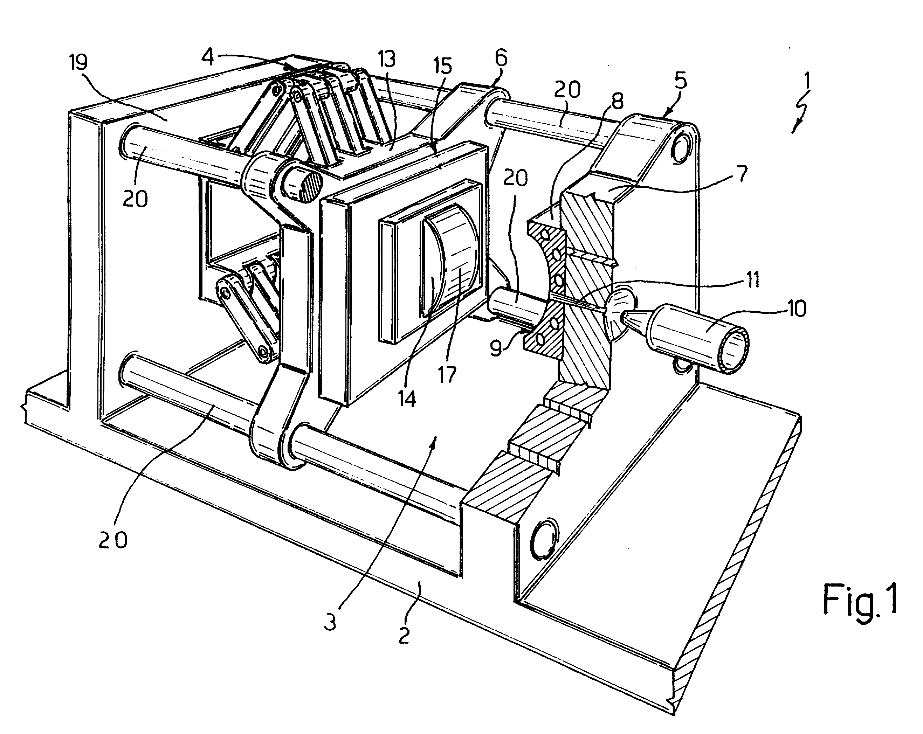

In Figure 1, the label 1 indicates a press comprising a bed 2, a mould 3 and an operating member 4 for the press 1.

The mould 3 comprises a stationary half-mould 5 secured to the bed 2 and a movable half-mould 6 coacting, in use, with the stationary half-mould 5. In particular, the operating member 4 operates the movable half-mould 6 between an open position, in which it is separated from the stationary half-mould 5, and a closed position in which the movable half-mould 6 is in contact with the stationary half-mould 5.

The stationary half-mould 5 comprises a stationary support wall 7 secured and substantially orthogonal to the bed 2 and a dye 8 fixed to the stationary support wall 7. The dye 8 defines a cavity 9 which, in use, receives the material for working from an injection unit 10 via an injection nozzle 11, in a manner known per se.

The movable half-mould 6 comprises a movable support wall 13 facing the stationary support wall 7 and a punch 14 fixed to the movable support wall 13 by anchoring plates 15. A lamina 17 bearing the reliefs in negative of the optical part to be made is fixed to the punch 14 and is preferably made of ferrous metallic material.

The operating member 4 is interposed between the movable support wall 13 and a reaction wall 19 secured to the bed 2 and can for example be constructed from one or more hydraulic cylinders or from toggle joint mechanisms (shown in Fig. 1). The movable support wall 13 runs on horizontal guides 20 parallel to the bed 2 and orthogonal to the stationary support wall 7.

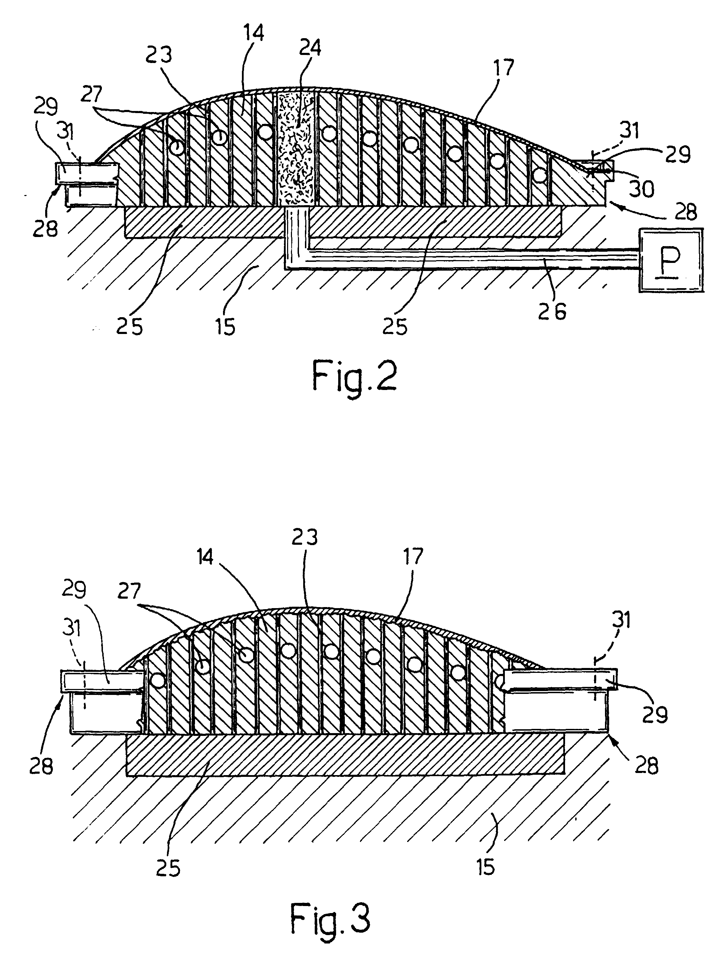

The punch 14 is illustrated in greater detail in Figure 2. It is made of nonmagnetic material (for example brass, copper/beryllium alloys) and houses within it inserts of magnetizable material 23 (for example steel) and inserts of porous material 24 (for example high porosity steel). The inserts of magnetizable material 23 co-act with magnetic members 25 (for example permanent magnet or electromagnets) inserted inside the anchoring plates 15, while the inserts of porous material 24 are connected to an outlet duct 26 for exhausting off the air from the movable half-mould 6, same also being inserted inside the anchoring plates 15 and connected to a vacuum source P known per se and hence not described in detail.

Devices 27 for the thermoregulation of the temperature of the punch 14 are positioned, in a manner known per se, inside the nonmagnetic material constituting the punch 14.

Mechanical restraints 28 perimetrally encircle the lamina 17 and permit stable anchoring of the punch 14. In the example illustrated, the mechanical restraints 28 comprise a sealing ring 29 having a seat 30 for the lamina 17 and clamping screws 31.

Preferably, the structure of the punch 14 as shown in Fig. 2 is used in cases in which the lamina 17 has been manufactured in planar form (and subsequently matched to the desired curved form) and exhibits roughnesses which are below predefined limits (for example 0.05 Ra).

In the case in which the lamina 17 was manufactured curved and exhibits a roughness of the face placed in contact with the punch 14 which is below predefined limits (for example 0.2 Ra) it is possible to use a punch similar to 14 of Fig. 2, which differs from the latter only through the absence of the inserts of porous material 24 and of the outlet duct 26.

In use, the magnetic members 25 are energized, and these magnetize the inserts of magnetizable material 23. As a consequence, these exert a force of attraction on the lamina 17 which guarantees the adherence of the lamina 17 to the punch 14.

Should the inserts of porous material 24 be present, they provide for the creation of a vacuum between the lamina 17 and the punch 14, exerting a further force of attraction between the two parts and thus improving their adherence.

Illustrated in Figure 3 is a punch 14 used preferably in the case in which the lamina 17 was manufactured curved and exhibits a roughness of the face placed in contact with the punch 14 which is above predefined limits (in the example 0.2 Ra).

In this case, in fact, the presence of such a high roughness would not enable the mechanical restraints 28 and the magnetic members 25 to guarantee sufficient adherence of the lamina 17 to the punch 14. It is thus necessary to precede the phase of anchoring the lamina 17 by a phase of matching the surface of the punch to the surface of the lamina 17.

According to Figure 3, the lamina 17, of nickel or any other conductive material, is used as electrode in an electroerosion process. The electro-erosion process, known per se and hence not described in detail, consists in applying a current between the lamina 17 and the punch 14 in order to generate an electrical discharge which alters the surface of the punch 14, so as to match it to that of the lamina 17 and thereby guarantee perfect adherence of the two parts.

The lamina 17 is thus anchored to the punch 14 using the magnetic attraction exerted via the inserts of magnetizable material 23 and the mechanical restraints 28, as shown in Fig. 3, similar to what is illustrated in Fig. 2.

The advantages of the present method are as follows. It makes it possible to obtain good contact between lamina and punch even with surfaces which are curved in two dimensions. Moreover, this good contact is guaranteed even for laminae which exhibit fairly high surface roughnesses. Finally, the costs linked with the construction of the mould do not entail large increases in expenses and make it possible to enhance the quality of the final product.

In short, it is clear that modifications and variants may be made to the method described and illustrated here, without thereby departing from the scope of the present invention.

## Claims

1. Method of making a mould (3) for injection moulding of optical parts of illumination devices for automobiles using curved laminar elements, said mould (3) comprising a stationary half-mould (5) and a movable half-mould (6) co-acting, in use, with said stationary half-mould (5); said movable half-mould (6) comprising a punch (14) carrying a lamina (17) and magnetic anchoring means (23, 25) for anchoring said lamina (17) to said punch (14); said method being characterized in that it comprises the phases of disposing said lamina (17) on a surface of said punch (14) and electrically matching said surface of said punch (14) to said lamina (17).

2. Method according to claim 1, characterized in that said magnetic anchoring means (23, 25) comprise inserts of magnetizable material (23) housed in said punch (14) and magnetic field generating means (25) carried by said movable half-mould (6) and able to magnetize said inserts of magnetizable material (23).

3. Method according to Claim 2, characterized in that said punch (14) is made of nonmagnetic material.

4. Method according to Claim 2 or 3, characterized in that said movable half-mould (6) comprises anchoring plates (15) carrying said punch (14); said magnetic field generating means (25) being housed in said anchoring plates (15).

5. Method according to Claim 4, characterized in that said magnetic field generating means (25) exhibit a portion disposed in contact with said inserts of magnetizable material (23).

6. Method according to any one of claims 2 to 5, characterized in that said mould (3) comprises an insert of porous material (24) housed in said punch (14), vacuum generating means (P) and an exhaust channel (26) communicating with said insert of porous material (24) and with said vacuum generating means (P).

7. Method according to any one of claims 2 to 6, characterized in that said mould (3) comprises mechanical anchoring means (28) for anchoring said lamina (17) to said punch (14).

8. Method according to Claim 7, characterized in that said mechanical anchoring means (28) comprise a sealing ring (29) fixed to said movable half-mould (6) and disposed along a perimetral portion of said lamina (17).

9. Method according to any one of claims 2 to 8, characterized in that said magnetic field generating means (25) comprise permanent magnets.

10. Method according to any one of claims 2 to 9, characterized in that said magnetic field generating means (25) comprise electromagnets.

11. Method according to any one of claims 2 to 10, characterized in that said punch (14) is constituted from a material chosen from the group comprising copper, beryllium, their alloys and brass.

12. Method according to Claim 1, characterized in that said phase of electrically matching comprises the phase of applying a current between said lamina (17) and said punch (14) and generating an electrical discharge.

## Revendications

1. Procédé de fabrication d'un moule (3) pour mouler par injection des pièces optiques de dispositifs d'éclairage pour véhicules automobiles utilisant des éléments en feuille cintrés, ledit moule (3) comportant un demi-moule fixe (5) et un demi-moule mobile (6) collaborant, en service, avec ledit demi-moule fixe (5) ; ledit demi-moule mobile (6) comportant un poinçon (14) portant une feuille (17) et des moyens d'ancrage magnétiques (23, 25) pour ancrer ladite feuille (17) sur ledit poinçon (14) ; ledit procédé se caractérisant par le fait qu'il comporte les phases consistant à disposer ladite feuille (17) sur une surface dudit poinçon (14) et à adapter électriquement ladite surface dudit poinçon (14) à ladite feuille (17).

2. Procédé selon la revendication 1, caractérisé par le fait que lesdits moyens d'ancrage magnétiques (23, 25) comportent des garnitures insérées de matériau magnétisable (23) logées dans ledit poinçon (14) et des moyens (25) de génération d'un champ magnétique portés par ledit demi-moule mobile (6) et pouvant magnétiser lesdites garnitures insérées dudit matériau magnétisable (23).

3. Procédé selon la revendication 2, caractérisé par le fait que ledit poinçon (14) est fait d'un matériau non magnétique.

4. Procédé selon la revendication 2 ou 3, caractérisé par le fait que ledit demi-moule mobile (6) comporte des plaques d'ancrage (15) portant ledit poinçon (14) ; lesdits moyens (25) de génération d'un champ magnétique étant logés dans lesdits plaques d'ancrage (15).

5. Procédé selon la revendication 4, caractérisé par le fait que lesdits moyens (25) de génération d'un champ magnétique montrent une portion disposée en contact avec lesdites garnitures insérées de matériau magnétisable (23).

6. Procédé selon l'une quelconque des revendications 2 à 5, caractérisé par le fait que ledit moule (3) comporte une garniture insérée de matériau poreux (24) logée dans ledit poinçon (14), des moyens (P) de génération du vide et un canal d'échappement (26) communiquant avec la dite garniture insérée de matériau poreux (24) et avec lesdits moyens (P) de génération du vide.

7. Procédé selon l'une quelconque des revendications 2 à 6, caractérisé par le fait que ledit moule (3) comporte des moyens d'ancrage mécaniques (28) pour ancrer ladite feuille (17) sur ledit poinçon (14).

8. Procédé selon la revendication 7, caractérisé par le fait que lesdits moyens d'ancrage mécaniques comportent un anneau d'étanchéité (29) fixé audit demi-moule mobile (6) et disposé le long de la portion périmétrique de ladite feuille (17).

9. Procédé selon l'une quelconque des revendications 2 à 8, caractérisé par le fait que lesdits moyens (25) de génération d'un champ magnétique comportent des aimants permanents.

10. Procédé selon l'une quelconque des revendications 2 à 9, caractérisé par le fait que lesdits moyens (25) de génération d'un champ magnétique comportent des électro-aimants.

11. Procédé selon l'une quelconque des revendications 2 à 10, caractérisé par le fait que ledit poinçon (14) est constitué d'un matériau choisi dans le groupe comportant cuivre, beryllium, leurs alliages et laiton.

12. Procédé selon la revendication 1, caractérisé par le fait que ladite phase d'adaptation électrique comporte la phase consistant à appliquer un courant entre ladite feuille (17) et ledit poinçon (14) et à générer une décharge électrique.

## Patentansprüche

1. Verfahren zum Herstellen einer Gießform (3) für den Druckguß optischer Teile von Beleuchtungsvorrichtungen für Kraftfahrzeuge unter Verwendung gekrümmter Lamellenelemente, wobei die Gießform (3) eine stationäre Halbgießform (5) und eine bewegliche Halbgießform (6), die im Gebrauch mit der stationären Halbgießform (5) zusammenwirkt, enthält; wobei die bewegliche Halbgießform (6) einen Stempel (14) enthält, der eine Lamelle (17) und magnetische Verankerungseinrichtungen (23, 25) zum Verankern der Lamelle (17) am Stempel (14) enthält; wobei das Verfahren dadurch gekennzeichnet ist, daß es die Schritte des Anordnens der Lamelle (17) auf einer Oberfläche des Stempels (14) und des elektrischen Anpassens der Oberfläche des Stempels (14) an die Lamelle (17) umfaßt.

2. Verfahren nach Anspruch 1, dadurch gekennzeichnet, daß die magnetischen Verankerungseinrichtungen (23, 25) Einlagen aus magnetisierbarem Material (23), die im Stempel (14) untergebracht sind, und eine Magnetfelderzeugungseinrichtung (25), die von der beweglichen Halbgießform (6) getragen wird und die Einlagen aus magnetisierbarem Material (23) magnetisieren kann, enthalten.

3. Verfahren nach Anspruch 2, dadurch gekennzeichnet, daß der Stempel (14) aus nichtmagnetischem Material hergestellt ist.

4. Verfahren nach Anspruch 2 oder 3, dadurch gekennzeichnet, daß die bewegliche Halbgießform (6) Verankerungsplatten (15), die den Stempel (14) tragen, enthält; wobei die Magnetfelderzeugungseinrichtung (25) in den Verankerungsplatten (15) untergebracht ist.

5. Verfahren nach Anspruch 4, dadurch gekennzeichnet daß die Magnetfelderzeugungseinrichtung (25) einen mit den Einlagen aus magnetisierbarem Material (23) in Kontakt befindlichen Abschnitt besitzt.

6. Verfahren nach irgendeinem der Ansprüche 2 bis 5, dadurch gekennzeichnet, daß die Gießform (3) eine Einlage aus porösem Material (24), die in dem Stempel (14) untergebracht ist, eine Unterdruckerzeugungseinrichtung (P) sowie einen Ausstoßkanal (26), der mit der Einlage aus porösem Material (24) und mit der Unterdruckerzeugungseinrichtung (P) in Verbindung steht, umfaßt.

7. Verfahren nach irgendeinem der Ansprüche 2 bis 6, dadurch gekennzeichnet, daß die Gießform (3) mechanische Verankerungseinrichtungen (28) zum Verankern der Lamelle (17) am Stempel (14) umfaßt.

8. Verfahren nach Anspruch 7, dadurch gekennzeichnet, daß die mechanischen Verankerungseinrichtungen (28) einen Dichtungsring (29) enthalten, der an der beweglichen Halbgießform (6) befestigt ist und längs eines Umfangsabschnitts der Lamelle (17) angeordnet ist.

9. Verfahren nach irgendeinem der Ansprüche 2 bis 8, dadurch gekennzeichnet, daß die Magnetfelderzeugungseinrichtung (25) Permanentmagneten umfaßt.

10. Verfahren nach irgendeinem der Ansprüche 2 bis 8, dadurch gekennzeichnet, daß die Magnetfelderzeugungseinrichtung (25) Elektromagneten umfaßt.

11. Verfahren nach irgendeinem der Ansprüche 2 bis 10, dadurch gekennzeichnet, daß der Stempel (14) aus einem Material gebildet ist, das aus der Gruppe gewählt ist, die Kupfer, Beryllium, ihre Legierungen und Messing umfaßt.

12. Verfahren nach Anspruch 1, dadurch gekennzeichnet, daß der Schritt des elektrischen Anpassens den Schritt des Anlegens eines Stroms zwischen der Lamelle (17) und dem Stempel (14) und des Erzeugens einer elektrischen Entladung umfaßt.
